# EUROPÄISCHE PATENTSCHRIFT

(11) **EP 0 730 776 B1**
(45) Veröffentlichungstag und Bekanntmachung des Hinweises auf die Patenterteilung: **20.05.1998**
(21) Anmeldenummer: 95900616.4
(22) Anmeldetag: 10.11.1994
(51) Int. Cl.: G21C 9/016, G21C 11/08

(54) **VORRICHTUNG ZUM RÜCKHALTEN EINER KERNSCHMELZE INNERHALB DES AUSBREITUNGSRAUMS EINER KERNREAKTORANLAGE**
DEVICE FOR RETAINING A CORE MELT-THROUGH INSIDE THE SPREADING CHAMBER OF A NUCLEAR REACTOR INSTALLATION
DISPOSITIF DE RETENUE D'UN PRODUIT DE FUSION DU COEUR DANS LA CHAMBRE DE PROPAGATION D'UNE INSTALLATION DE REACTEUR NUCLEAIRE

(30) Priorität: 23.11.1993 DE 4339904
(43) Veröffentlichungstag der Anmeldung: 11.09.1996
(73) Patentinhaber: SIEMENS AKTIENGESELLSCHAFT, 80333 München (DE)
(72) Erfinder: HAU, Gerhard, D-72461 Albstadt (DE); WISTUBA, Lothar, D-91074 Herzogenaurach (DE); HOLLMANN, Josef, D-96132 Schlüsselfeld (DE); FISCHER, Manfred, D-91054 Erlangen (DE)
(86) Internationale Anmeldenummer: DE9401329
(87) Internationale Veröffentlichungsnummer: WO9514997

(56) Entgegenhaltungen:
- EP-A- 0 105 800
- DE-A- 2 557 884
- DE-A- 4 032 736
- DE-B- 2 459 339
- GB-A- 2 236 210
- US-A- 3 979 866
- US-A- 4 003 785
- US-A- 4 226 676

## Beschreibung

Die Erfindung bezieht sich auf eine Rückhaltevorrichtung mit einer mehrlagigen Schutzauskleidung zum Schutz der Trag- und Begrenzungsstruktur eines Ausbreitungsraumes, zum Zwecke der kontrollierten Ausbreitung und Kühlung einer heißen Schmelze, insbesondere einer Kernschmelze, die nach Austritt aus dem Kernreaktordruckbehälter einer nach dem Ausbreitungskonzept aufgebauten Kernreaktoranlage in einen Ausbreitungsraum leitbar und darin abkühlbar ist.

Für eine Rückhaltung von aus einem Reaktordruckbehälter einer Kernreaktoranlage austretender Kernschmelze ist es bekannt, unmittelbar unterhalb des Reaktordruckbehälters in der den Reaktordruckbehälter tragenden Reaktorkaverne einen tiegelartigen Auffangbehälter anzuordnen. Der Auffangbehälter kann die Kernschmelze in einem kompakten Volumen aufnehmen und ist sowohl an seiner Außenseite sowie in seinem Inneren kühlbar. In der GB 2 236 210 A ist eine solche Rückhaltevorrichtung mit einem Auffangbehälter, auch Kernfänger genannt, beschrieben. Der Kernfänger wird durch eine Tragstruktur gebildet, die von der Wand und dem Boden der Reaktorkaverne beabstandet ist und wird durch auf den Boden angeordnete Stützelemente getragen. Im Inneren ist der Kernfänger mit einer Kernrückhalteschicht aus Zirkonoxid-Steinen ausgekleidet. Diese Kernrückhalteschicht ist mit einer Opferschicht, vorzugsweise aus einem Stahl zu ihrem Schutz während eines normalen Kraftwerkbetriebes überzogen. Die Kernrückhalteschicht ist somit zwischen der Tragstruktur und der Opferschicht Sandwich-artig eingelegt. Zur mechanischen Stabilität der Opferschicht sind die Zirkonoxidsteine untereinander sowie mit der Tragstruktur und der Opferschicht durch einen Zirkonoxid-Zement verbunden. Um austretende Kernschmelze vollständig aufnehmen zu können, ist der Auffangbehälter tiegelartig bis über den Boden des Reaktordruckbehälters nach oben gezogen, wodurch die Kernschmelze in einer Art Schmelztiegel mit einer geringen direkt kühlbaren Oberfläche aufgefangen werden kann.

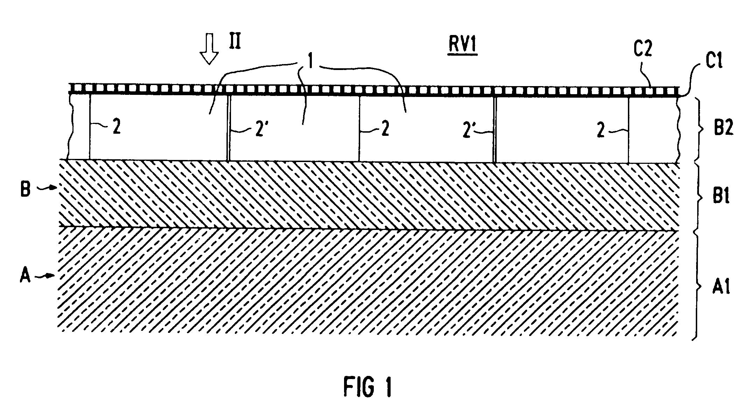

Eine Rückhaltevorrichtung zur Aufnahme und Ausbreitung von Kernschmelze ist beschrieben in dem Konferenz-Sonderdruck "Emerging Nuclear Energy Systems 1989, ICENES'89, Karlsruhe, 03. bis 06. Juli, Proceedings of the 5th International Conference on Emerging Nuclear Systems, Seiten 19 bis 24, siehe insbesondere Figur 1 auf Seite 23 in Verbindung mit dem Text auf Seite 21. Bei dieser bekannten Rückhaltevorrichtung ist ebenfalls innerhalb des Reaktorsicherheitsbehälters (Containments) direkt unterhalb des Reaktordruckbehälters eine gekühlte Auffangwanne (Kernfänger) angeordnet, in welcher sich die Schmelze großflächig ausbreiten und in direktem Kontakt an eine vergrößerten Oberfläche mit Wasser kühlbar ist. Der durch die Nachzerfallswärme der Schmelze erzeugte Dampf kondensiert im oberen Teil der Stahlhülle des Reaktorsicherheitsbehälters und fließt von dort zurück zur Rückhaltevorrichtung. Im einzelnen ist der Boden der Auffangwanne durch eine Stützstruktur aus Doppel-T-Trägern getragen, und durch eine perforierte Stahlplatte gebildet. Durch die Stahlplatte hindurch sowie über Öffnungen in der Wand der Auffangwanne ist Kernschmelze unmittelbar mit Wasser kühlbar. Auf der Stahlplatte befindet sich ein "sacrificial concrete layer". Diese Opferschicht ist im Flächenbereich der Schildgrube, also unterhalb des Reaktordruckbehälters, verstärkt. Kühlwasser im unteren Teil des Reaktorsicherheitsbehälters umgibt die Auffangwanne permanent. Das Kühlwasser kann sich auch an der Oberseite der Opferschicht ausbreiten, d.h. auf der dem Reaktordruckbehälter zugewandten Oberfläche der Opferschicht. Es sollte aber möglichst ein sofortiger Kontakt einer aus der Bodenkalotte eines Reaktordruckbehälters austretenden Kernschmelze mit Wasser vermieden werden. Ferner ist bei der bekannten Rückhaltevorrichtung die Wasserschicht unterhalb der Auffangwanne die einzige Schutzschicht für den darunter befindlichen Konstruktionsbeton.

Die Erfindung geht von der Überlegung aus, den Schutz für die Trag- und Begrenzungsstruktur eines Auffangraumes zu verbessern. Außerdem soll die Rückhaltevorrichtung so aufgebaut sein, daß ein sofortiger Direktkontakt von herabfallenden Kernschmelzmassen mit dem Kühlwasser nicht eintreten kann, so daß eine Wasserkühlung vorgesehen sein kann, die verzögert und dosiert beginnt.

Allgemeiner gesprochen soll sich die vorstehende Aufgabe auch auf eine Rückhaltevorrichtung für eine heiße Schmelze beziehen. Zusammengefaßt läßt sich die der Erfindung zugrunde liegende spezielle Aufgabe wie folgt definieren: Bei einer nach dem Ausbreitungskonzept arbeitenden Rückhaltevorrichtung für eine Kernschmelze, bei der nach Ausbreitung der Kernschmelze diese an ihrer Außenoberfläche insbesondere mit Wasser gekühlt wird, sollen die folgenden Probleme gelöst sein:
- Verhinderung des Kontaktes der Kernschmelze mit der Trag- und Begrenzungsstruktur im allgemeinen und mit dem Gebäudestrukturbeton bzw. Konstruktionsbeton im besonderen und Verhinderung der Erosion dieses Betons;
- Stabilisierung der Kernschmelze im Bereich der Schutzauskleidung, insbesondere oberhalb der Schutz- und Isolierschicht;
- Beeinflussung von Eigenschaften und Konsistenz der Kernschmelze, wie z.B. Viskosität, Schmelzpunkt, Fragmentation;
- Reduzierung der durch die Kernschmelze entstehenden thermischen Belastung auf die Trag- und Begrenzungsstruktur des Ausbreitungsraumes.

Gegenstand der Erfindung ist die eingangs definierte Rückhaltevorrichtung, welche zur Lösung der gestellten Aufgabe ausgerüstet ist:
mit einer Schutzauskleidung, die wenigstens zweilagig und hierzu zusammengesetzt ist aus:
- einer äußeren Opferschicht als Thermoschock-Barriere und als Aufschmelzsubstanz und
- einer an die Innenseite der Opferschicht angrenzenden Schutz- und Isolierschicht für die darunter befindliche Trag- und Begrenzungsstruktur, die als thermischer Schutz und als Halteschicht für die heiße Schmelze umfaßt:
   -- eine an die Trag- und Begrenzungsstruktur angrenzende erste Teilschicht aus feuerfestem Beton, und
- eine an die Opferschicht angrenzende zweite Teilschicht aus temperaturbeständigen Keramiksteinen.

Vorteilhafte Weiterbildungen dieser Rückhaltevorrichtung sind in den Unteransprüchen angegeben.

Die mit der Erfindung erzielbaren Vorteile sind vor allem darin zu sehen, daß die neue Rückhaltevorrichtung aufgrund ihres besonderen Schichtenaufbaus in der Lage ist, der chemischen, der Druck- und der Temperaturbeanspruchung einer sich ausbreitenden Kernschmelze zu widerstehen, ohne daß die Trag- und Begrenzungsstruktur des Ausbreitungsraumes in Mitleidenschaft gezogen würde, und zwar auch dann, wenn die Kernschmelze auf ihrer Unterseite nicht gekühlt wird. Eine Kühlung der Kernschmelze auf ihrer Oberseite ist zur schnellen Abführung der Nachzerfallswärme und aus Abschirmgründen vorteilhaft und liegt im Rahmen der bevorzugten Ausführung der Erfindung bei der Rückhaltung und Kühlung einer Kernschmelze. Bei einer heißen Schmelze, die keine Kernschmelze ist, kann u.U. auf eine Wasserkühlung der Oberfläche verzichtet werden. Für die zweite Teilschicht der Schutz- und Isolierschicht haben sich ZrO₂-Steine als Keramiksteine besonders zweckmäßig erwiesen. Zur Lagensicherung der Keramiksteine ist die Schutz- und Isolierschicht bevorzugt an der Trag- und Begrenzungsstruktur verankert. Ein günstiges Verankerungssystem besteht darin, daß an oder zwischen den Zirkonoxidsteinen mit feuerfestem Beton verfüllbare Hohlräume vorgesehen sind, welche die Köpfe oder Muttern von Zugankern aufnehmen, und daß die Zuganker in der Trag- und Begrenzungsstruktur verankert sind und die erste Teilschicht aus feuerfestem Beton durchdringen.

Herstellungs- und montagetechnisch empfiehlt es sich, quaderförmige Zirkonoxidsteine und zwischen diesen in horizontaler Richtung gesehen zueinander benachbarten Zirkonoxidsteinen Dehnfugen vorzusehen. Die Dehnfugen tragen dem Wärmeausdehnungskoeffizienten der Zirkonoxidsteine Rechnung, welcher größer ist als derjenige von feuerfestem Beton.

Gemäß einer weiteren bevorzugten Ausführungsform sind die Schutz- und Isolierschicht bzw. die Keramiksteine von einer Metall-, insbesondere einer Stahlplatte, abgedeckt. Man gewinnt dadurch eine weitere Barriere gegen Eindringen der Kernschmelze und einen wasserdichten Abschluß. Die Metallplatte ist auf ihrer Außenseite bevorzugt von einer Opferbetonschicht bedeckt. Ein solcher Opferbeton wird durch Aufschmelzen allmählich verbraucht; er verzögert das Aufheizen der Kernschmelze, kann diese dünnflüssiger machen und trägt dadurch zur Fragmentation bei. Unter Fragmentation versteht man die Ausbildung einer porösen, zerklüfteten Struktur der Kernschmelze, welche das Kühlwasser bis zu der noch flüssigen Restschmelze besser durchläßt als letztere. Die Opferschicht im allgemeinen bzw. der Opferbeton im besonderen dienen bevorzugt auch dazu, den Schmelzpunkt des Gemischs aus Kernschmelze und Opfermaterial zu erniedrigen. Die letzterwähnten Erkenntnisse sind bereits in der DE-OS 40 41 295 erwähnt, die allerdings eine Kernrückhaltevorrichtung betrifft, die nach dem Tiegelkonzept arbeitet. Das heißt, die Kernschmelze kann sich nicht großflächig ausbreiten, sondern wird in einem Stahltiegel, der direkt unterhalb des Reaktordruckbehälters gelagert ist, aufgefangen.

Für die Oberfläche der Rückhaltevorrichtung, die als erste in Kontakt mit der Kernschmelze kommt, hat sich als besonders günstig eine Verkleidung mit einer Zirkonfaserschicht (Zirkonfilz bzw. Zirkonvlies) und mit einem die Zirkonfaserschicht abdeckenden auf diese aufgelegten Metallgitterrost erwiesen. Diese Doppelschicht aus Zirkonfasern und einem Metallgitterrost kann unmittelbar unterhalb eines Liners oder einer Stahlplatte in einem Zwischenraum zwischen letzterer und einer Lage Keramiksteinen vorgesehen sein; sie kann aber auch als äußere Doppelschicht auf den Keramik-, insbesondere Zirkonoxidsteinen, aufgelegt sein. Zirkonfilz wie auch die Zirkonoxidsteine haben den Vorteil, daß sie durch Neutronenstrahlung keine große Aufwärmung erfahren; Zirkon bzw. die Legierung Zirkaloy ist aus diesem Grunde wesentlicher Bestandteil der Brennelement-Hüllrohre. Von Vorteil ist die hohe Temperaturbeständigkeit von Zirkon bzw. Zirkonoxidkeramik. Der Zirkonfilz mindert aufgrund der Faserstruktur den Thermoschock, dem die Keramiksteine (zweite Teilschicht) ausgesetzt sind. Der im Verbund auf den Zirkonfilz aufgelegte Gitterrost hält den Zirkonfilz beim Ausfließen der Kernschmelze in seiner Lage, gleichzeitig führt die Gitterform soviel Energie ab, daß die Kernschmelze in den Gittermaschen nach kurzer Zeit erstarrt.

Je nach Leistung der Kernreaktoranlage und demzufolge je nach Menge der anfallenden Kernschmelze kann auf eine die Keramiksteine abdeckende Stahlplatte (Liner) als Außenschicht noch eine Opferbetonschicht vorgesehen sein. Eine solche Opferbetonschicht eignet sich besonders gut dazu, in diese ein Kühlsystem mit temperaturabhängig öffnenden Einspeisekanälen zu integrieren, so daß bei Kontakt mit der Kernschmelze dieser ein Kühlmittel zuführbar ist. Insbesondere ist die Opferschicht oder Opferbetonschicht von einem Rohrleitungssystem durchzogen, dessen Rohre nach oben ragende, normalerweise verschlossene Einspeisstutzen aufweisen, welche bei Kontakt mit der Kernschmelze aufschmelzen.

Wenn die Oberflächenkühlung der Kernschmelze durch einen Kühlwasserfilm groß genug ist, dann kann es zur Kühlung der Kernschmelze von ihrer Unterseite genügen, eine Vielzahl von Kühlmitteldepots in Gestalt von aufschmelzbaren Behältern über die Grundfläche der Opferschicht verteilt in diese einzubetten.

Bevorzugtes Kühlmittel ist normales (sogenanntes leichtes) Wasser, das nach seiner Verdampfung und Kondensation innerhalb des Containments des Ausbreitungsraums wieder von einem innenliegenden Flutbehälter (sogenannter IRWST = In-Containment Refueling Water Storage Tank) zugeführt werden kann.

Die Trag- und Begrenzungsstruktur umfaßt insbesondere eine Bodenstruktur und - soweit die Möglichkeit eines Kontakt mit der sich ausbreitenden Kernschmelze besteht - auch eine Wandstruktur.

Mehrere Ausführungsbeispiele nach der Erfindung sowie weitere Merkmale und Vorteile werden im folgenden anhand der Zeichnung erläutert. In dieser zeigen in zum Teil vereinfachter Darstellung:
FIG 1 Eine Rückhaltevorrichtung nach der Erfindung mit einer ersten mehrlagigen Schutzauskleidung in einem Querschnitt des Bodenbereiches der Ausbreitungskammer;
FIG 2 die Draufsicht II gemäß Figur 1 auf den Ausschnitt eines äußeren Gitterrostes;
FIG 3 die Gitterrost-Maschen der Einzelheit III aus Figur 2 vergrößert dargestellt;
FIG 4 ein zweites Ausführungsbeispiel für eine Rückhaltevorrichtung nach der Erfindung mit einer zweiten mehrlagigen Schutzauskleidung, wobei ein Querschnitt durch einen Boden- und Wandbereich gezeigt ist;
FIG 5 eine dritte Version einer Rückhaltevorrichtung mit einer dritten Ausführung einer mehrlagigen Schutzauskleidung in einem Querschnitt durch den Bodenbereich;
FIG 6 eine Abwandlung der Rückhaltevorrichtung nach Figur 1 mit einem zusätzlichen äußeren Liner und diesem zugeordneten Kühlwasserzufuhr- und Dampfabströmstutzen (vierte Version) in entsprechender Darstellung zu Figur 1;
FIG 7 eine fünfte Version der Rückhaltevorrichtung, bei der die äußere Opferschicht aus Opferbeton und darin integriertem Kühlrohrsystem besteht;
FIG 8 in einem Querschnitt durch den Bodenbereich eine sechste Version der Rückhaltevorrichtung in einer Abwandlung des Beispiels nach Figur 7, wobei das Kühlrohrsystem durch wassergefüllte Stopfen ersetzt ist;
FIG 9 eine Abwandlung der Ausführung nach Figur 8 (siebte Version), bei der die äußere Opferschicht an ihrer Unterseite eine Stahlplatte aufweist, in entsprechender Darstellung zu Figur 8;
FIG 10 eine Abwandlung der fünften Version nach Figur 7, bei welcher die Stutzen des in der Opferschicht eingebetteten Kühlrohrsystems bei Kontakt mit der Kernschmelze einen Kühlwasserstrahl abgeben, der zumindest zu einer partiellen Fragmentierung der auf diese Weise gekühlten Kernschmelzpartien führt, in entsprechender Darstellung zu Figur 7 (achte Version), und
FIG 11 im Querschnitt und im Ausschnitt eine Kernreaktoranlage mit Reaktorgrube, darin befindlichem Kernreaktordruckbehälter und einem über einen geneigten Kanal mit der Reaktorgrube in Verbindung bringbaren Ausbreitungsraum, der mit einer Rückhaltevorrichtung nach der Erfindung ausgerüstet ist. Wegen der Gesamtdarstellung ist die Rückhaltevorrichtung in kleinem Maßstab gezeigt.

Zu der im Ausschnitt eines Bodenbereiches dargestellten Trag- und Begrenzungsstruktur A (im folgenden "Struktur") einer ersten Rückhaltevorrichtung RV1 nach Figur 1 gehört ein Ausbreitungsraum, im folgenden auch als Ausbreitungskammer 5 bezeichnet, einer Kernreaktoranlage. Die Struktur A bzw. Bodenstruktur Al besteht im allgemeinen aus sogenanntem Konstruktionsbeton; vorhandene Armierungen wie Spannkabel oder Stahlträger sind der Einfachheit halber nicht dargestellt. Auf die Struktur A folgt die als Ganzes mit B bezeichnete Schutz- und Isolierschicht. Diese besteht aus einer an die Bodenstruktur Al angrenzenden ersten Teilschicht B1 aus feuerfestem Beton und aus einer zwischen einer äußeren Opferschicht C und der ersten Teilschicht B1 angeordneten zweiten Teilschicht B2 aus temperaturbeständigen Keramiksteinen 1. Diese vorzugsweise quaderförmigen Keramiksteine 1 sind insbesondere Zirkonoxidsteine (ZrO₂-Steine). Zwischen einigen oder allen der einander benachbarten ZrO₂-Steine werden Fugen 2 und zweckmäßigerweise auch Dehnfugen 2' vorgesehen. Dies gilt für alle im folgenden dargestellten Ausführungsbeispiele auch dann, wenn Dehnfugen 2' nicht besonders dargestellt sind.

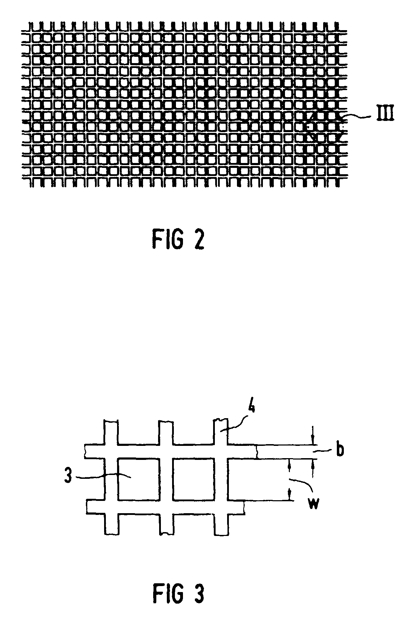

Die zweite Teilschicht B2 ist auf ihrer Außenseite abgedeckt durch eine Zirkonfaserschicht C1, die z.B. 20 mm stark ist und aus Zirkonfilz oder -vlies bestehen kann. Auf ihrer Außenseite ist die Zirkonfaserschicht C1 abgedeckt durch einen aufgelegten Metallgitterrost C2, dessen Dicke z.B. 30 mm beträgt und dessen Gitterstruktur in Figur 2 und 3 in Draufsicht und in vergrößerter Draufsicht dargestellt ist. Für die Schutz- und Isolierschicht B hat sich eine Dicke von ca. 500 mm und für ihre Teilschichten B1, B2 von je etwa 250 mm als vorteilhaft erwiesen. Gitterrost C2 und Zirkonfaserschicht C1 schützen die Keramiksteine 1 bei einer sich ausbreitenden Kernschmelze gegen mechanische Beanspruchung und bilden auch eine Wärmesenke. Zirkon und insbesondere ZrO₂-Steine oder - Keramik hat einen besonders hohen Korrosionswiderstand gegenüber flüssigen Metallen oder Metallegierungen. Eine an ihrer Oberseite durch einen Wasserfilm gekühlte Kernschmelze, die sich auf der als Ganzes mit C bezeichneten Opferschicht ausbreitet, kann also diese Opferschicht C nicht sogleich auflösen, und die Bemessung dieser Schicht wird vorzugsweise so getroffen, daß die Kernschmelze zu erstarren beginnt, bevor die Schicht C "geopfert" ist. Die Weite w der Gittermaschen 3 beträgt z.B. 30 mm, die Breite b der Gitterstege 4 z.B. 10 mm.

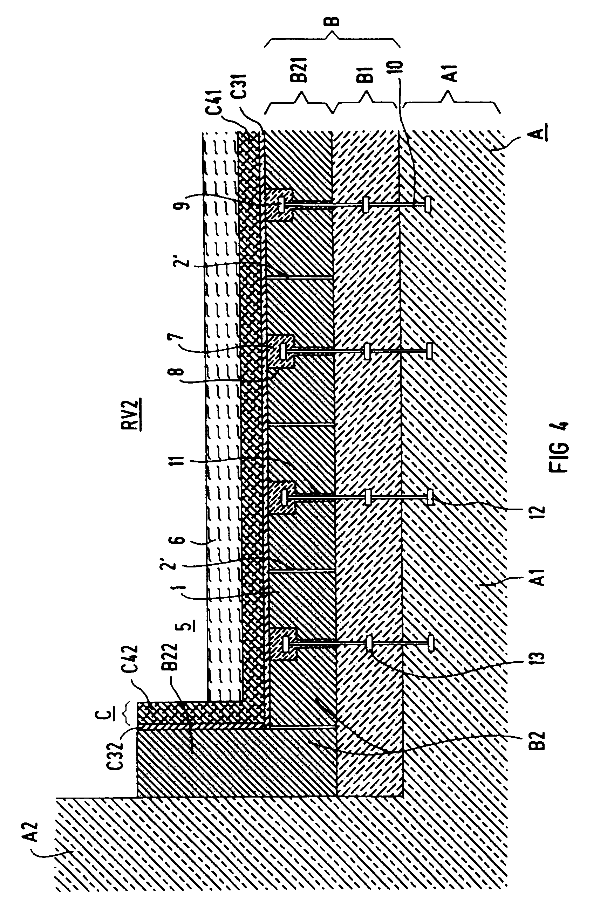

Beim Ausführungsbeispiel einer zweiten Rückhaltevorrichtung RV2 nach Figur 4 ist die Struktur A nicht nur mit ihrer Bodenstruktur Al, sondern auch mit ihrer Wandstruktur A2 im Ausschnitt dargestellt. Die Opferschicht C ist im Vergleich z.B. nach Figur 1 derart abgewandelt, daß diese aus einer Stahlplatte C31 für den Bodenbereich und einer daran angrenzenden Stahlplatte C32 für den Wandbereich besteht und ferner aus einer äußeren Schicht C41 aus Opferbeton für den Bodenbereich und einer Schicht C42 aus Opferbeton für den Wandbereich, wobei diese beiden Schichten C41 und C42 ebenso wie die Stahlplatten C31, C32 eine geschlossene Abdeckung bilden. In der Ausbreitungskammer 5 befindet sich, schematisch angedeutet, die Kernschmelze (oder allgemein: heiße Schmelze) 6. Auch hier ist die Bemessung der mehrlagigen Schutzauskleidung so getroffen, daß die generell mit C bezeichnete Opferschicht von der Schmelze 6 aufgeschmolzen oder aufgebraucht (geopfert) ist, wenn die Schmelze 6 in Erstarrung übergeht oder erstarrt ist.

Zur Vermeidung einer Verformung der Schutz- und Isolierschicht B und mit ihr der Opferschicht C unter der thermischen, mechanischen und chemischen Beanspruchung durch die Schmelze 6 ist die Schutz- und Isolierschicht B an der Trag- und Begrenzungsstruktur A verankert. Hierzu sind an den Keramiksteinen 1, insbesondere den ZrO₂-Steinen, mit feuerfestem Beton 7 oder geeigneten Keramikstopfen ausfüllbare Hohlräume 8 vorgesehen, welche die Köpfe oder Muttern 9 von Zugankern 10 aufnehmen. Diese Zuganker 10 sind in der Struktur A verankert und durchdringen die erste Teilschicht B1 aus feuerfestem Beton sowie entsprechende Verankerungskanäle 11 in den Keramiksteinen 1, Zusätzlich zu den Verankerungsstellen 12 in der Struktur A können weitere Verankerungsstellen 13 im feuerfesten Beton B1 vorgesehen sein. Entsprechende Verankerungen können in der Teilschicht B22 zwischen dieser und der Wandstruktur A2 vorgesehen sein. Die Verankerungen 9 bis 13 verhindern ein Aufschwimmen der zweiten Teilschicht B21 bzw. der Keramiksteine. Da die thermische Belastung bei der dargestellten niedrigen Höhe der Kernschmelze 6 für die Wandstruktur A2 nicht so hoch ist wie diejenige für die Bodenstruktur, so kann im Wandbereich, wie dargestellt, von einer Zwischenlage B1 aus feuerfestem Beton abgesehen werden. Die Dehnfugen zwischen den Keramiksteinen 1 sind wieder mit 2' bezeichnet.

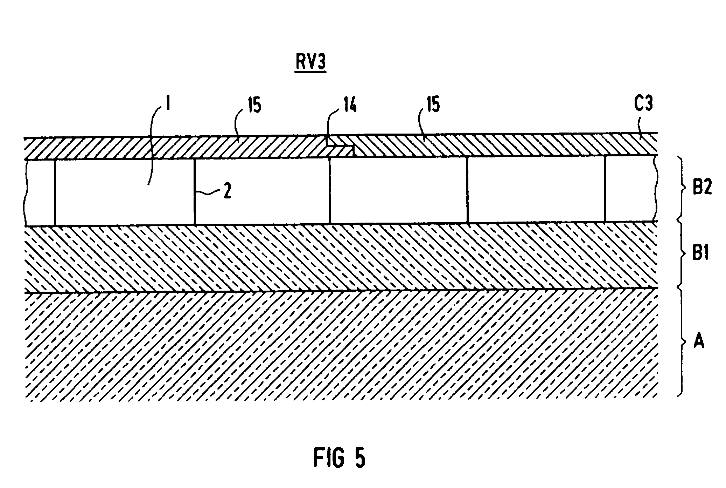

Bei der Rückhaltevorrichtung RV3 nach Figur 5 entspricht die Schutzauskleidung mit den Schichten B1, B2 und C3 weitgehend derjenigen bei der Rückhaltevorrichtung RV2 nach Figur 4; es ist lediglich die äußere Opferbetonschicht C41 (in Figur 5 ist nur der Bodenbereich dargestellt) weggelassen, statt dessen ist die Stahlplatte C3 in ihrer Dicke vergrößert, z.B. auf eine Dicke von 80 mm. Zur Vermeidung von Verwerfungen der Stahlplatte C3 ist diese mit Stoßfugen 14 versehen, in deren Bereich die Teilplatten der Stahlplatte C3 formschlüssig ineinander greifen. Vorhandene Dehnfugen zwischen den Keramiksteinen 1 und den Stahlteilplatten 15 sind nicht besonders dargestellt.

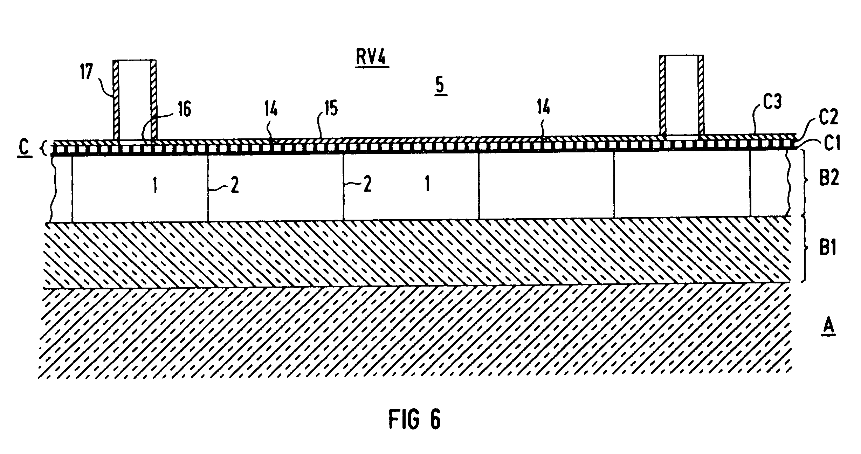

Die Rückhaltevorrichtung RV4 nach Figur 6 (die ebenfalls nur für den Bodenbereich dargestellt ist) unterscheidet sich von der Rückhaltevorrichtung RV1 nach Figuren 1 bis 3 dadurch, daß auf den Gitterrost C2 der Opferschicht C eine Stahlplatte C3 aufgelegt ist, die aus einzelnen Teilplatten 15 mit Stoßfugen 14 zwischen ihnen besteht. Diese auch als Liner zu bezeichnende Stahlplatte C3 ist mit Dampfabströmöffnungen 16 versehen, die zugleich Kühlwasser-Einströmöffnungen sind. An diese Öffnungen 16 sind in die Ausbreitungskammer 5 bzw. einen Ausbreitungsraum ragende Ein- und Abströmstutzen 17 angeschlossen. Diese Ein- und Abströmstutzen 17 dienen zum Einströmen des Kühlwassers, wenn dessen Pegelstand oberhalb der Oberkante der Stutzen 17 gestiegen ist, so daß das Kühlwasser in den Zwischenraum zwischen Stahlplatte 3 und Zirkonfilz C1 in die Kammern des Gitterrostes C2 eindringen kann und so die Kernschmelze auch von unten gekühlt wird. Die Stutzen 17 dienen auch dem Ausströmen von eventuellem Dampf.

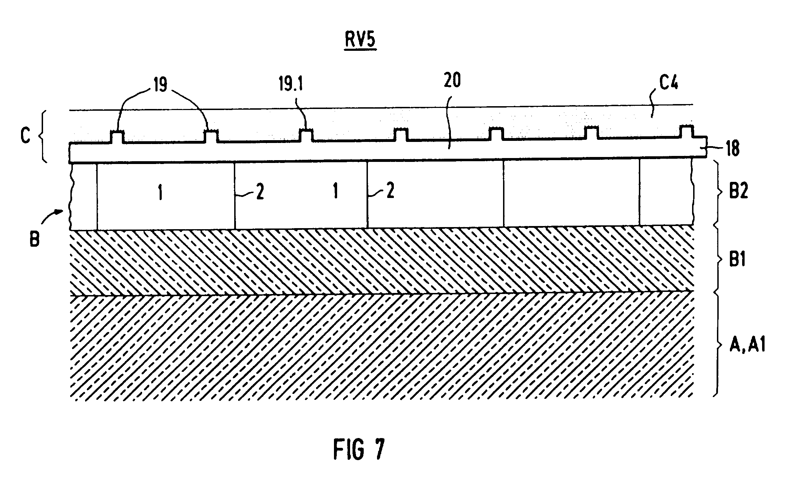

Die Rückhaltevorrichtung RV5 nach Figur 7, die ebenfalls nur im Ausschnitt eines Bodenbereichs dargestellt ist, entspricht im Prinzip der Rückhaltevorrichtung RV2 nach Figur 4, mit dem Unterschied, daß anstelle einer Stahlplatte ein Kühlsystem 18 in die Opferschicht C integriert und von einer Opferbetonschicht C4 abgedeckt ist. Bei dem Kühlsystem 18 handelt es sich insbesondere um über die Grundfläche der Rückhaltevorrichtung RV5 verteilte Rohrleitungen 20. Es kann sich auch um einen flachen Kasten handeln, der durch Zwischenwände versteift ist. In regelmäßigen Abständen befinden sich an dem Kasten bzw. den Rohrleitungen verschlossene Stutzen 19. Bei einer sich ausbreitenden Kernschmelze wird zunächst der Opferbeton angeschmolzen, und die kleinen Kühlwasser-Austrittsstutzen 19 werden in ihrem Deckbereich 19.1 ebenfalls angeschmolzen und öffnen sich deshalb. Diese Öffnung wird von dem vorhandenen Innendruck im Kühlsystem 18 unterstützt. Die Kernschmelze wird damit nicht nur von einem oberen Kühlwasserfilm (nicht dargestellt) gekühlt, sondern auch an ihrer Unterseite. Es tritt deshalb relativ rasch eine Fragmentierung und Erstarrung der Kernschmelze ein, so daß deren weiteres Eindringen über die Oberseite der Keramiksteine 1 in die Schutz- und Isolierschicht B verhindert ist.

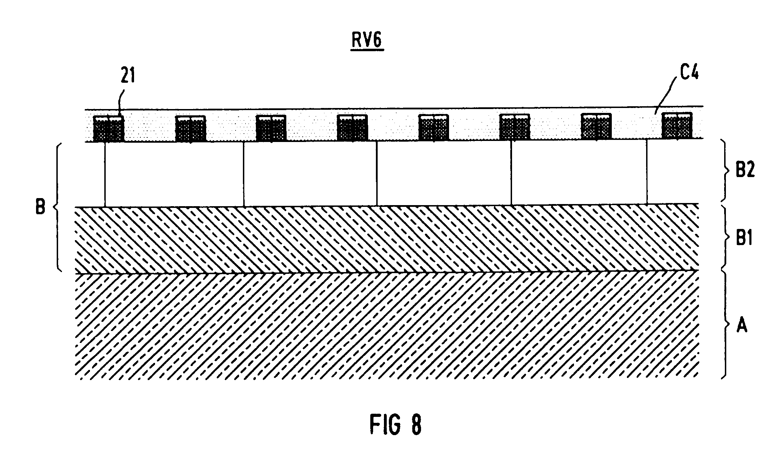

Die Rückhaltevorrichtung RV6 nach Figur 8 unterscheidet sich von derjenigen (RV5) nach Figur 7 dadurch, daß eine Vielzahl von - in möglichst gleichmäßigem Raster über die Ausbreitungsfläche verteilt - Kühlmitteldepots in Gestalt von aufschmelzbaren kleinen Behältern 21 über die Grundfläche der Opferschicht C vorgesehen und in diese eingebettet sind. Der Haupteffekt der Behälter 21 ist es, kleine lokale Eruptionen im Aufschmelzfalle herbeizuführen und damit eine Framentierung der Kernschmelze, welche dadurch durchlässiger wird. Der Nebeneffekt ist eine geringfügige Kühlung. Der Opferbeton, in welchen die Behälter 21 eingebettet sind, ist wieder mit C4 bezeichnet.

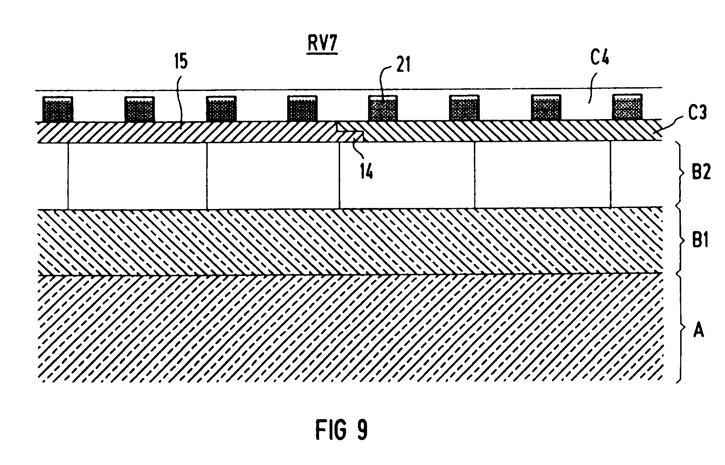

Die Rückhaltevorrichtung RV7 nach Figur 9 entspricht grundsätzlich derjenigen nach Figur 8, bis auf das Merkmal, daß zwischen der zweiten Teilschicht B2 aus Keramiksteinen und der Außenschicht C4 aus Opferbeton und darin eingelassenen Kühlwasserbehältern 21 eine Stahlplatte C3 als Zwischenlage eingefügt ist. Diese Stahlplatte, die wieder aus Teilplatten 15 mit Stoßstellen 14 besteht, ist verhältnismäßig dick, z.B. hat sie eine Dicke von 80 mm. Die gesamte Opferschicht hat z.B. eine Dicke von 200 mm, die Opferbetonschicht C4 eine Dicke von z.B. 120 mm und die darin eingebetteten Kühlwasserbehälter 21 haben eine Höhe von z.B. 100 mm. Der gewählte gegenseitige Abstand der Behälter 21 von 300 mm kann zur Intensivierung der Fragmentierung der Kernschmelze noch verringert werden.

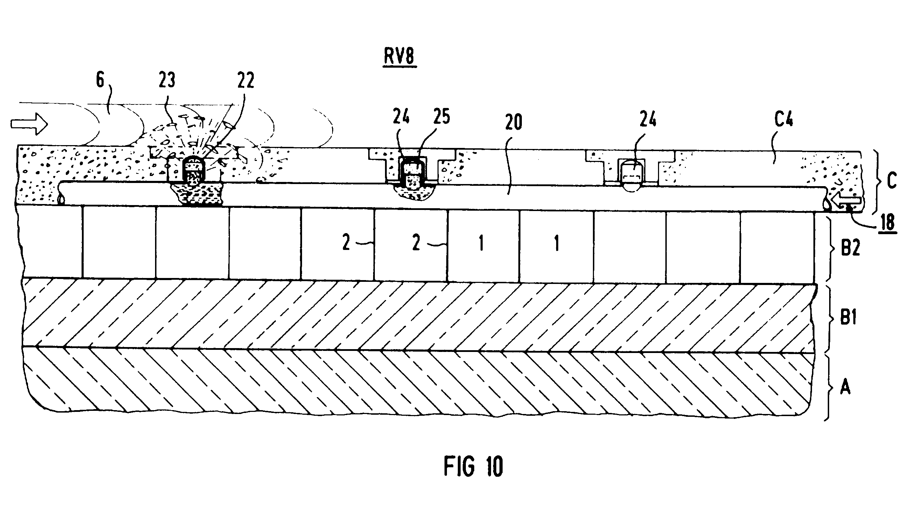

Die Rückhaltevorrichtung RV8 nach Figur 10 entspricht grundsätzlich derjenigen (RV5) nach Figur 7, mit dem Unterschied, daß die Stutzen 22 des Kühlsystems 18, die an entsprechenden Rohrleitungen oder Kastenkörpern 20 angeordnet sind, speziell so aufgebaut sind, daß sie im Moment des Aufschmelzens unter innerem Überdruck einen Kühlwasserstrahl 23 abstrahlen, welcher zu einer partiellen Fragmentierung der oberhalb der Opferschicht 10 befindlichen Kernschmelze 6 führt, wie es schematisch angedeutet ist. Hierzu ist es besonders günstig, über die Stutzen 22 eine Kunststoffkappe 24 dichtend zu stülpen und den Füllstand im Kühlsystem 18 so zu bemessen, daß sich ein Luftpolster 25 jeweils innerhalb der Stutzen 22 ausbilden kann. Dieses Luftpolster 25 in Verbindung mit der Kunststoffkappe 24 wirkt als thermische Isolierung, so daß wenn das Gemisch aus Kernschmelze und aufgeschmolzenem Opferbeton C4 mit der jeweiligen Kunststoffkappe 24 in Berührung kommt, diese schlagartig durchschmilzt.

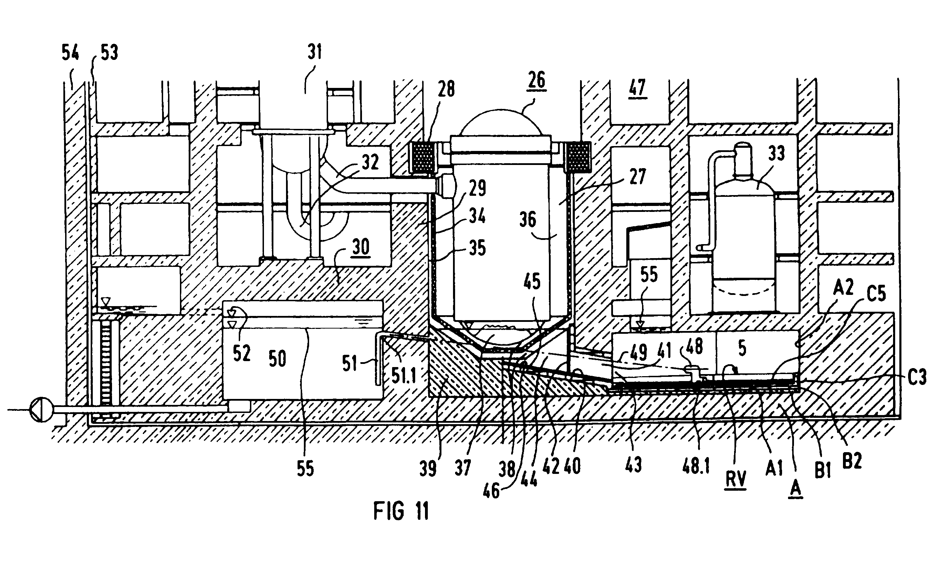

Figur 11 zeigt eine allgemein mit RV bezeichnete Rückhaltevorrichtung, eingebaut in die Ausbreitungskammer 5 (auch als Ausbreitungsraum bezeichnet) einer Kernreaktoranlage. Von dieser sind lediglich im Ausschnitt dargestellt der Kernreaktordruckbehälter 26, der der Hauptbeststandteil einer Druckwasser-Kernreaktoranlage ist und innerhalb einer Reaktorgrube (auch als Schildgrube bezeichnet) 27 angeordnet und mittels einer Tragringkonstruktion 28 an einem Tragschild 29 aufgelagert ist. Zu erkennen sind weiterhin in entsprechenden Containmenträumen innerhalb der Betonkonstruktion 30 einer der (bei einer Vier-Loop-Anlage vier) Dampferzeuger 31, verbunden mit dem Druckbehälter 26 über Hauptkühlmittelleitungen 32 über eine (nicht ersichtliche) Hauptkühlmittelpumpe. An den Primärkreis über einen nicht ersichtlichen Druckschalter angeschlossen ist weiterhin ein Druckhalter-Abblasebehälter 33. Die Reaktorgrube 27 ist durch eine Wärmedämmung 34 unterteilt in einen äußeren, der Belüftung dienenden Spaltraum 35 und in einen inneren Inspektionsspaltraum 36. Unterhalb der Bodenkalotte 37 des Druckbehälters 26 befindet sich ein Raum 38, der nach unten begrenzt wird durch einen Sockel 39 aus feuerfestem Beton, der in Richtung auf die Ausbreitungskammer 5 eine geneigte Ebene 40 bildet.

Oberhalb der geneigten Ebene 40 befindet sich ein entsprechend geneigter Kanal 41, der die Wand der Tragstruktur bzw. des Tragschildes 29 durchdringt und im Kernschmelzfalle eine Verbindung zwischen dem Raum 38 und der Ausbreitungskammer 5 herstellt. Der Kanal 41 ist im Normalbetrieb zweifach abgeschottet, und zwar eingangsseitig durch eine durch die Kernschmelze zerstörbare Trennwand 42 und ausgangsseitig durch eine Dichtplatte 43. Letztere verhindert ein Eindringen von Kühlwasser in den Kanal 38, falls in die Ausbreitungskammer 5 irregulär Wasser eindringen sollte. Der Raum 38 ist in seinem dem Kanal 38 zugewandten Bereich größtenteils mit einem Verdrängungskörper 44, der durch die Kernschmelze aufschmelzbar ist, ausgefüllt. Der Verdrängungskörper 44 ist z.B. als Stahlkastenkonstruktion ausgeführt. Er verhindert eine Sammlung von Wasser in diesem Bereich, wodurch das Dampfexplosions-Potential reduziert wird. Die geneigte Ebene 40 (die auch eine flache Rinne sein kann) ist durch eine temperaturresistente Schicht 45, z.B. aus Keramiksteinen, verkleidet, und auf dieser zugleich wärmedämmenden Schicht 45 befindet sich eine Opferschicht 46 aus einem temperaturbeständigen Material, z.B. einer Stahllegierung, welche sich bis zum Ausgang des Kanals 38 fortsetzt.

Die Rückhaltevorrichtung RV kann so ausgebildet sein wie eine der beschriebenen Rückhaltevorrichtungen RV1 bis RV8 nach Figuren 1 bis 10. Dargestellt ist eine Struktur A als Teil der Betonkonstruktion 30 des Containments 47, umfassend eine Bodenstruktur Al und eine Wandstruktur A2, bestehend aus Konstruktionsbeton. Die Schutzauskleidung der Struktur A besteht aus der unteren Schutz- und Isolierschicht B1, B2 und der darüber befindlichen Opferschicht C3, C5. Es bedeuten:
B1 = erste Teilschicht aus feuerfestem Beton,
B2 = zweite, die erste Teilschicht B1 bedeckende Teilschicht aus Keramiksteinen, insbesondere ZrO₂-Steinen,
C3 = Stahlplatte, im Wandbereich hinterfüttert mit Keramiksteinen, insbesondere ZrO₂-Steinen,
C5 = äußere Lage der Opferschicht, bestehend aus Opferbeton.

Man erkennt, daß die Schichtung der Rückhaltevorrichtung RV nach Figur 11 weitgehend derjenigen nach Figur 4 entspricht. Zuganker sind in Figur 11 wegen der relativ kleinen Darstellung nicht gezeigt. Die Schichten B2 und C3 sind an der der Mündung des geneigten Kanals 41 zugewandten Seite der Rückhaltevorrichtung RV nicht hochgezogen, damit die eventuelle Kernschmelze einen direkten Weg zum Boden der Rückhaltevorrichtung RV nehmen und sich darin ausbreiten kann. Die Ausbreitungskammer 5 und die Rückhaltevorrichtung RV haben einen vieleckigen Grundriß. Im Bereich der Trennwand zwischen Ausbreitungskammer 5 und IRWST 50 befindet sich ein Verschlußorgan 48 in Gestalt eines etwa S-förmig gebogenen Rohrkrümmers, der an eine strichpunktiert angedeutete, geneigt verlaufende Rohrleitung 49 angeschlossen ist. Diese ist durch die Betonkonstruktion 30 bis zu einem Kühlwasserreservoir 50 hindurchgeführt und über ein Rohrknie mit einem Steigrohr 51 verbunden. Im normalen Betriebszustand befindet sich der Kühlwasserstand 52 weit oberhalb des oberen Endes des Steigrohres 51 bzw. seines Rohrknies 51.1, so daß vom Rohrknie bis zu diesem Wasserstand 52 ein Kühlwasservolumen von z.B. 220 m³ zuzüglich Primärkreisvolumen zur Verfügung steht. Das Kühlwasserreservoir 50 wird auch abgekürzt als IRWST bezeichnet (= In-Containment Refueling Water Storage Tank). Durch die Steigleitung 51 ist gewährleistet, daß im Kernschmelzfalle das kalte Wasser am IRWST-Boden für die Kühlung zur Verfügung steht, wobei eine (nicht dargestellte) Luftentlastungsbohrung im Bereich des Rohrknies 51.1 dazu dient, die Heber-Wirkung in der Steigleitung 51 zu beenden, wenn der Wasserspiegel unter das Rohrknie abfällt.

Das äußere Ende 48.1 des Verschlußorgans 48 ist z.B. als ein Kunststoffrohr ausgeführt, welches bei Kontakt mit der Kernschmelze aufschmilzt, auch dann, wenn sich in ihm Kühlwasser befindet. Im sehr unwahrscheinlichen Fall einer Kernschmelze würde sich diese im Raum 38 zunächst sammeln und, z.B. nach einer Haltezeit von 30 Minuten, den Verdrängungskörper 44 und die Trennwand 42 aufgeschmolzen haben, so daß sie sich durch den geneigten Kanal 41 bis zur Dichtplatte 43 am Ende des Kanals 41 ausbreitet. Die Dichtplatte 43 wird in relativ kurzer Zeit aufgeschmolzen, so daß sich nunmehr Kernschmelze auf der Opferschicht C5 der Rückhaltevorrichtung RV großflächig ausbreiten kann und dabei auch das Verschlußorgan 48 erreicht und dessen Mundstück zum Aufschmelzen bringt. Es kann nun das Kühlwasser aus dem Kühlwasserreservoir 50 seinen Weg über das Steigrohr 51, die Rohrleitung 49 und das Verschlußorgan 48 zur Oberfläche der Kernschmelze nehmen, wo es verdampft. Der Wasserdampf breitet sich im Containment 47 aus und kondensiert zum größten Teil an den relativ kühlen Innenflächen des z.B. aus Stahl bestehenden Sicherheitsbehälters 53, der, wie es im linken Teil der Figur 11 gezeigt ist, noch von einer Betonummantelung 54 (als Sicherheit gegen Flugzeugabsturz oder dergleichen) umgeben ist. Durch die Rückhaltevorrichtung RV, d.h. ihre Schichten - von außen nach innen gesehen - C5, C3, B2, B1 wird die in Figur 11 nicht dargestellte Kernschmelze, sei sie flüssig oder zum Teil teigig oder schon fest, vom Konstruktionsbeton A, A1, A2 ferngehalten. Die Phase der intensiven Kühlung der Kernschmelze dauert dabei so lange, bis sie erstarrt ist. Dieser Erstarrungsprozeß kann noch beschleunigt werden durch eine Wasserkühlung von der Unterseite der Kernschmelze her, wie es anhand der Figuren 7 bis 10 erläutert wurde (in Figur 11 nicht dargestellt). Der Wasserstand 55 oberhalb der Decke des Ausbreitungsraums 5 deutet den Wasserstand des Kühlwassers an für den Fall, daß das vorgesehene Kühlwasservolumen aus dem IRWST in den Ausbreitungsraum 5 übergetreten ist, so daß sich im kommunizierenden IRWST 50 der gleiche Wasserstand 55 einstellt. Das Verschlußorgan 48 weist in einer bevorzugten allgemeinen Ausführungsform einen temperaturabhängigen Öffnungsmechanismus auf, von dem das Kühlmittel über geeignete Maßnahmen ferngehalten wird, so daß ein frühzeitiges temperaturabhängiges Öffnen des Verschlußorganes gewährleistet ist. Das Verschlußorgan kann als ein Dichtungselement hierzu einen Kunststoffklotz oder eine Kunststoffplatte aufweisen, die jeweils an die Rohrleitung 49 angeflanscht ist. Das Verschlußorgan kann ebenfalls ein Dichtungselement mit einem vorgegebenen Sollbruchverhalten aufweisen, welches bei Hitzeeinwirkung durch die Schmelze durch Reißen, Bersten oder anderweitige Zerstörung die Rohrleitung freigibt. Hierzu ist das Dichtungselement beispielsweise eine Berstscheibe, eine Berstmembran aus Glas oder einem Metall. Es kann auch ein Dichtungselement mit einer Dichtklappe, welche durch einen Dehnbolzen geschlossen gehalten wird, aufweisen. Der Dehnbolzene ist bevorzugt ein metallischer Schmelzbolzen, beispielsweise aus Silber. Das Verschlußorgan kann zudem haubenartig ausgeführt sein, und über eine Schmelzlotverbindung dichtend mit der Rohrleitung verbunden sein.

Die Erfindung läßt sich mit Vorteil nicht nur bei Kernreaktoranlagen im Falle des sehr unwahrscheinlichen Kernschmelz-Störfalls verwenden, sondern überall dort, wo es darum geht, Gebäudekonstruktionen vor einer heißen, sich ausbreitenden Schmelze zu schützen, also z.B. in Gießereien, für den Fall, daß die Schmelze aus ihrem normalen Schmelzbett in benachbarte Gebäudezonen übertreten sollte.

## Patentansprüche

1. Rückhaltevorrichtung (RV, RV1-RV8) in einem Ausbreitungsraum (5) einer wassergekühlten Kernreaktoranlage, welcher Ausbreitungsraum (5) für eine kontrollierte großflächige Ausbreitung und Kühlung einer Kernschmelze (6) in einem Kernschmelzstörfall ausgelegt ist und eine in einer Ebene liegende Bodenstruktur (11) hat, mit einer mehrlagigen Schutzauskleidung (B, C) zum Schutz einer Trag- und Begrenzungsstruktur (A) des Ausbreitungsraumes (5), welche Schutzauskleidung (B, C) wenigstens zweilagig zusammengesetzt ist aus einer äußeren Opferschicht (C) als Thermoschock-Barriere und als Aufschmelzsubstanz und einer an die Innenseite der Opferschicht (C) angrenzenden Schutz- und Isolierschicht (B) für die darunter befindliche Trag- und Begrenzungsstruktur (A), umfassend
-- eine an die Trag- und Begrenzungsstruktur (A) angrenzende erste Teilschicht (B1) aus feuerfestem Beton
-- und eine an die Opferschicht (C) angrenzende zweite Teilschicht (B2) aus temperaturbeständigen Keramiksteinen (1).

2. Rückhaltevorrichtung nach Anspruch 1,
**dadurch gekennzeichnet,** daß die zweite Teilschicht (B1, B21, B22) Keramiksteine (1) aus Zirkonoxid (ZrO₂) aufweist.

3. Rückhaltevorrichtung nach Anspruch 1 oder 2,
**dadurch gekennzeichnet,** daß die Schutz- und Isolierschicht (B) an der Trag- und Begrenzungsstruktur (A) verankert ist.

4. Rückhaltevorrichtung nach Anspruch 3,
**dadurch gekennzeichnet,** daß an oder zwischen den Keramiksteinen (1) mit feuerfestem Beton (7) verfüllbare Hohlräume (8) vorgesehen sind, welche die Köpfe oder Muttern (9) von Zugankern (10) aufnehmen, und daß die Zuganker (10) in der Trag- und Begrenzungsstruktur (A) verankert sind und die erste Teilschicht (B1) aus feuerfestem Beton durchdringen.

5. Rückhaltevorrichtung nach Anspruch 2,
**dadurch gekennzeichnet,** daß die Zirkonoxidsteine (1) quaderförmig und zwischen in horizontaler Richtung gesehen zueinander benachbarten Zirkonoxidsteinen Dehnfugen (2') vorgesehen sind.

6. Rückhaltevorrichtung nach einem der Ansprüche 1 bis 5,
**dadurch gekennzeichnet,** daß die Schutz- und Isolierschicht (B) bzw. die Keramiksteine (1) von einer Metallplatte, insbesondere Stahlplatte (C3, C31), abgedeckt sind.

7. Rückhaltevorrichtung nach Anspruch 6,
**dadurch gekennzeichnet,** daß die Metallplatte (C31) auf ihrer Außenseite von einer Opferbetonschicht (C41) bedeckt ist.

8. Rückhaltevorrichtung nach Anspruch 6,
**dadurch gekennzeichnet,** daß zwischen der Metallplatte (C3) und der Schutz- und Isolierschicht (B) eine letztere abdeckende Zirkonfaserschicht (C1) aus Zirkonfilz bzw. Zirkonvlies und ein auf diese Zirkonfaserschicht (C1) aufgelegter Metallgitterrost (C2) angeordnet sind.

9. Rückhaltevorrichtung nach einem der Ansprüche 1 bis 5,
**dadurch gekennzeichnet,** daß die Schutz- und Isolierschicht (B) auf ihrer Außenseite abgedeckt ist durch eine Zirkonfaserschicht (C1) und einen darauf aufgelegten Metallgitterrost (C2).

10. Rückhaltevorrichtung nach einem der Ansprüche 1 bis 5,
**dadurch gekennzeichnet,** daß die Schutz- und Isolierschicht (B) von einer Opferbetonschicht (C4) abgedeckt ist.

11. Rückhaltevorrichtung nach einem der Ansprüche 1 bis 10,
**dadurch gekennzeichnet,** daß in die Opferschicht (C,C4) ein Kühlsystem (18) mit temperaturabhängig öffnenden Einspeisekanälen (19; 22) integriert ist, so daß bei Kontakt mit der Schmelze (6) dieser ein Kühlmittel zuführbar ist.

12. Rückhaltevorrichtung nach Anspruch 11,
**dadurch gekennzeichnet,** daß die Opferschicht (C,C4) von einem Rohrleitungssystem (20) durchzogen ist, dessen Rohre nach oben ragende, normalerweise verschlossene Einspeisstutzen (19; 22) aufweisen, welche bei Kontakt mit der Schmelze (6) aufschmelzen.

13. Rückhaltevorrichtung nach Anspruch 11,
**dadurch gekennzeichnet,** daß eine Vielzahl von Kühlmitteldepots (21) in Gestalt von aufschmelzbaren Behältern über die Grundfläche der Opferschicht (C,C4) verteilt in diese eingebettet ist.

14. Rückhaltevorrichtung nach einem der Ansprüche 11 oder 12,
**gekennzeichnet durch** Wasser als Kühlmittel.

15. Rückhaltevorrichtung nach einem der Ansprüche 1 bis 14,
**dadurch gekennzeichnet,** daß die Trag- und Begrenzungsstruktur (A) eine Bodenstruktur (A1) umfaßt.

16. Rückhaltevorrichtung nach einem der Ansprüche 1 bis 15,
**dadurch gekennzeichnet,** daß die Trag- und Begrenzungsstruktur (A) eine Wandstruktur (A2) umfaßt.

17. Rückhaltevorrichtung nach einem der Ansprüche 6, 8 oder 10, mit einem die Opferschicht (C) verkleidenden Liner (C3) oder einer entsprechenden Metallplatte,
**dadurch gekennzeichnet,** daß der Liner (C3) bzw. die Metallplatte Dampfabströmöffnungen (16) und daran angeschlossene, in den Ausbreitungsraum (5) ragende Abströmstutzen (17) aufweisen.

## Claims

1. Retaining device (RV, RV1-RV8) in a spreading chamber (5) of a water-cooled nuclear reactor installation, which spreading chamber (5) is designed for a controlled, large-area spreading and cooling of a core melt (6) in the case of a core melt incident and has a ground structure (A1) lying in one plane, having a multi-layer protective coating (B, C) for the protection of a bearing and limiting structure (A) of the spreading chamber (5), which protective coating (B, C) is composed of at least two layers, namely an outer sacrificial layer (C) as thermal shock barrier and as melting substance and a protective and insulating layer (B) adjoining the inner side of the sacrificial layer (C) for the bearing and limiting structure (A) beneath the protective and insulating -layer (B), comprising
- a first partial layer (B1) adjoining the bearing and limiting structure (A) and consisting of fireproof concrete,
- and a second partial layer (B2) adjoining the sacrificial layer (C) and consisting of heat-resistant ceramic blocks (1).

2. Retaining device according to claim 1, characterized in that the second partial layer (B1, B21, B22) has ceramic blocks (1) consisting of zirconium oxide (ZrO₂).

3. Retaining device according to claim 1 or 2, characterized in that the protective and insulating layer (B) is anchored to the bearing and limiting structure (A).

4. Retaining device according to claim 3, characterized in that cavities (8) which can be filled with fire-proof concrete (7) are provided on or between the ceramic blocks (1), which cavities receive the heads or nuts (9) of tension rods (10), and in that the tension rods (10) are anchored in the bearing and limiting structure (A) and penetrate the first partial layer (B1) consisting of fire-proof concrete.

5. Retaining device according to claim 2, characterized in that the zirconium oxide blocks (1) are provided in a square shape and expansion joints (2') are provided between zirconium oxide blocks which are adjacent to each other when seen in the horizontal direction.

6. Retaining device according to one of claims 1 to 5, characterized in that the protective and insulating layer (B) and the ceramic blocks (1) are covered by a metal plate, in particular a steel plate (C3, C31).

7. Retaining device according to claim 6, characterized in that the metal plate (C31) is covered by a sacrificial concrete layer (C41) on its outer side.

8. Retaining device according to claim 6, characterized in that between the metal plate (C3) and the protective and insulating layer (B) there are arranged a zirconium fibre layer (C1) of zirconium felt or zirconium fleece, which zirconium fibre layer (C1) covers the protective and insulating layer (B), and a metal grating (C2) placed on to this zirconium fibre layer (C1).

9. Retaining device according to one of claims 1 to 5, characterized in that the protective and insulating layer (B) is covered on its outer side by a zirconium fibre layer (C1) and a metal grating (C2) placed thereon.

10. Retaining device according to one of claims 1 to 5, characterized in that the protective and insulating layer (B) is covered by a sacrificial concrete layer (C4).

11. Retaining device according to one of claims 1 to 10, characterized in that a cooling system (18) with feed channels (19; 22) which open in a temperature-dependent manner is integrated into the sacrificial layer (C,C4), so that in the event of contact with the melt (6) a coolant can be supplied to the melt.

12. Retaining device according to claim 11, characterized in that a pipeline system (20) passes through the sacrificial layer (C,C4), the pipes of which system have upwardly rising, normally closed feed connection pieces (19; 22) which melt upon contact with the melt (6).

13. Retaining device according to claim 11, characterized in that a plurality of structures where coolant is deposited (21) are in the form of meltable containers and are distributed over the base of the sacrificial layer (C,C4) and are embedded in the latter.

14. Retaining device according to one of claims 11 or 12, characterized by water as coolant.

15. Retaining device according to one of claims 1 to 14, characterized in that the bearing and limiting structure (A) comprises a ground structure (A1).

16. Retaining device according to one of claims 1 to 15, characterized in that the bearing and limiting structure (A) comprises a wall structure (A2).

17. Retaining device according to one of claims 6, 8 or 10, having a liner (C3) lining the sacrificial layer (C) or having a corresponding metal plate, characterized in that the liner (C3) or the metal plate has steam outlet openings (16) and outlet connection pieces (17) which are connected thereto and project into the spreading chamber (5).

## Revendications

1. Dispositif de retenue (RV, RV1-RV8) dans une chambre de propagation (5) d'une installation de réacteur nucléaire refroidie à l'eau, la chambre de propagation (5) étant conçue pour une propagation et un refroidissement contrôlés sur une grande surface d'un produit de fusion (6) dans un incident de fusion du coeur et comportant une structure de base (A1) située dans un plan, comprenant un garnissage de protection multicouche (B, C) pour la protection d'une structure portante et de délimitation (A) de la chambre de propagation (5), le garnissage de protection (B, C) se composant au moins de deux couches, une couche sacrificielle extérieure (C) servant de barrière thermochoc et de substance de fusion, et une couche de protection et d'isolation (B) adjacente au côté intérieur de la couche sacrificielle (C) pour la structure portante et de délimitation sous-jacente (A), comprenant:
- une première couche partielle (B1) en béton réfractaire adjacente à la structure portante et de délimitation (A)
- et une deuxième couche partielle (B2) de briques céramiques (1) résistant à la température, adjacente à la couche sacrificielle (C).

2. Dispositif de retenue selon la revendication 1, caractérisé en ce que la deuxième couche partielle (B1, B21, B22) comprend des briques céramiques (1) en oxyde de zirconium (ZrO₂).

3. Dispositif de retenue selon la revendication 1 ou 2, caractérisé en ce que la couche de protection et d'isolation (B) est ancrée dans la structure portante et de délimitation (A).

4. Dispositif de retenue selon la revendication 3, caractérisé en ce que des cavités (8) pouvant être remplies de béton réfractaire (7) et destinées à recevoir les têtes ou les écrous (9) de tirants (10), sont ménagées sur ou entre les briques céramiques (1), et en ce que les tirants (10) sont ancrés dans la structure portante et de délimitation (A) et traversent de part en part la première couche partielle (B1) en béton réfractaire.

5. Dispositif de retenue selon la revendication 2, caractérisé en ce que les briques en oxyde de zirconium (1) ont la forme de carreaux et en ce que des joints de dilatation (2') sont ménagés, vu dans le sens horizontal, entre des briques en oxyde de zirconium voisines les unes des autres.

6. Dispositif de retenue selon l'une des revendications 1 à 5, caractérisé en ce que la couche de protection et d'isolation (B) resp. les briques céramiques (1) sont recouvertes d'une plaque de métal, en particulier d'une plaque d'acier (C3, C31).

7. Dispositif de retenue selon la revendication 6, caractérisé en ce que la plaque de métal (C31) est recouverte sur sa face extérieure d'une couche de béton sacrificielle (C41).

8. Dispositif de retenue selon la revendication 6, caractérisé en ce qu'une couche de fibre de zirconium (C1) constituée d'un feutre de zirconium resp. d'un non tissé de zirconium est disposée entre la plaque de métal (C3) et la couche de protection et d'isolation (B) en recouvrant cette dernière et une grille métallique (2) est placée sur cette couche de fibre de zirconium (C1).

9. Dispositif de retenue selon l'une des revendications 1 à 5, caractérisé en ce que la couche de protection et d'isolation (B) est recouverte sur sa face extérieure d'une couche de fibre de zirconium (C1) et d'une grille métallique (C2) placée sur celle-ci.

10. Dispositif de retenue selon l'une des revendications 1 à 5, caractérisé en ce la couche de protection et d'isolation (B) est recouverte d'une couche de béton sacrificielle (C4).

11. Dispositif de retenue selon l'une des revendications 1 à 10, caractérisé en ce qu'un système de refroidissement (18) comprenant des conduits d'alimentation (19; 22) qui s'ouvrent en fonction de la température, est incorporé dans la couche sacrificielle (C, C4) de telle manière que celle-ci puisse être alimentée par un fluide de refroidissement en cas de contact avec le produit de fusion (6).

12. Dispositif de retenue selon la revendication 11, caractérisé en ce que la couche sacrificielle (C, C4) est traversée par un système de tuyauterie (20) dont les tuyaux sont munis de tubulures d'alimentation (19; 22) en saillie vers le haut et normalement fermées, qui s'ouvrent par fusion en cas de contact avec le produit de fusion (6).

13. Dispositif de retenue selon la revendication 11, caractérisé en ce qu'une pluralité de dépôts de fluide de refroidissement (21) sous forme de réservoirs susceptibles de s'ouvrir par fusion, sont répartis sur la base de la couche sacrificielle (C, C4) en étant noyés dans cette dernière.

14. Dispositif de retenue selon l'une des revendications 11 ou 12, caractérisé en ce qu'on utilise de l'eau comme fluide de refroidissement.

15. Dispositif de retenue selon l'une des revendications 1 à 14, caractérisé en ce que la structure portante et de délimitation (A) comprend une structure de base (A1).

16. Dispositif de retenue selon l'une des revendications 1 à 15, caractérisé en ce que la structure portante et de délimitation (A) comprend une structure murale (A2).

17. Dispositif de retenue selon l'une des revendications 6, 8 ou 10, comprenant une chemise (C3) ou une plaque de métal correspondante recouvrant la couche sacrificielle (C), caractérisé en ce que des ouvertures d'évacuation de la vapeur (15) et des tubulures d'évacuation (17) raccordées à ces dernières et faisant saillie dans la chambre de propagation (5), sont ménagées dans la chemise (C3) et/ou la plaque de métal.
